# EUROPEAN PATENT SPECIFICATION

(11) **EP 0 646 844 B1**
(45) Date of publication and mention of the grant of the patent: **02.06.1999**
(21) Application number: 94114964.3
(22) Date of filing: 22.09.1994
(51) Int. Cl.: G03D 13/00

(54) **Photographic processing machine**
Fotografische Entwicklungsmaschine
Machine de développement photographique

(30) Priority: 24.09.1993 JP 238288/93; 24.09.1993 JP 238336/93; 20.05.1994 JP 107081/94
(43) Date of publication of application: 05.04.1995
(73) Proprietor: NORITSU KOKI CO., LTD., Wakayama-shi, Wakayama (JP)
(72) Inventor: Fujushima, Shinji c/o Noritsu Koki Co.,Ltd., Wakayama-shi Wakayama (JP); Kojima, Masayuki c/o Noritsu Koki Co.,Ltd., Wakayama-shi Wakayama (JP); Kawashima, Mitsuji c/o Noritsu Koki Co.,Ltd., Wakayama-shi Wakayama (JP); Negoro, Hisashi c/o Noritsu Koki Co.,Ltd., Wakayama-shi Wakayama (JP); Kiyonaga, Yutaka c/o Noritsu Koki Co.,Ltd., Wakayama-shi Wakayama (JP); Masuda, Shigeru c/o Noritsu Koki Co.,Ltd., Wakayama-shi Wakayama (JP)
(74) Representative: Grünecker, Kinkeldey, Stockmair & Schwanhäusser Anwaltssozietät

(56) References cited:
- WO-A-91/20016
- DE-A- 3 623 084
- DE-A- 4 110 642
- PATENT ABSTRACTS OF JAPAN vol. 16, no. 421 (P-1414) 4 September 1992 & JP-A-04 142 539 (FUJI PHOTO FILM CO. LTD.) 15 May 1992

## Description

This invention relates to a photographic processing machine for automatically developing and drying film, printing images on films onto photographic paper, and developing and drying the photographic paper, according to the preamble of claim 1. Such a maschine is known from DE-A-41 10 642.

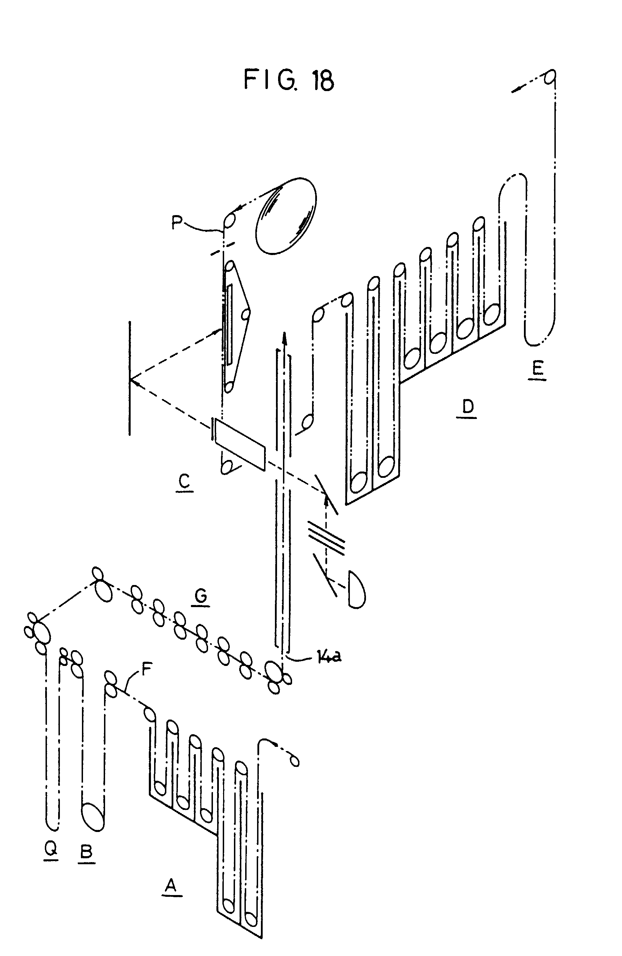

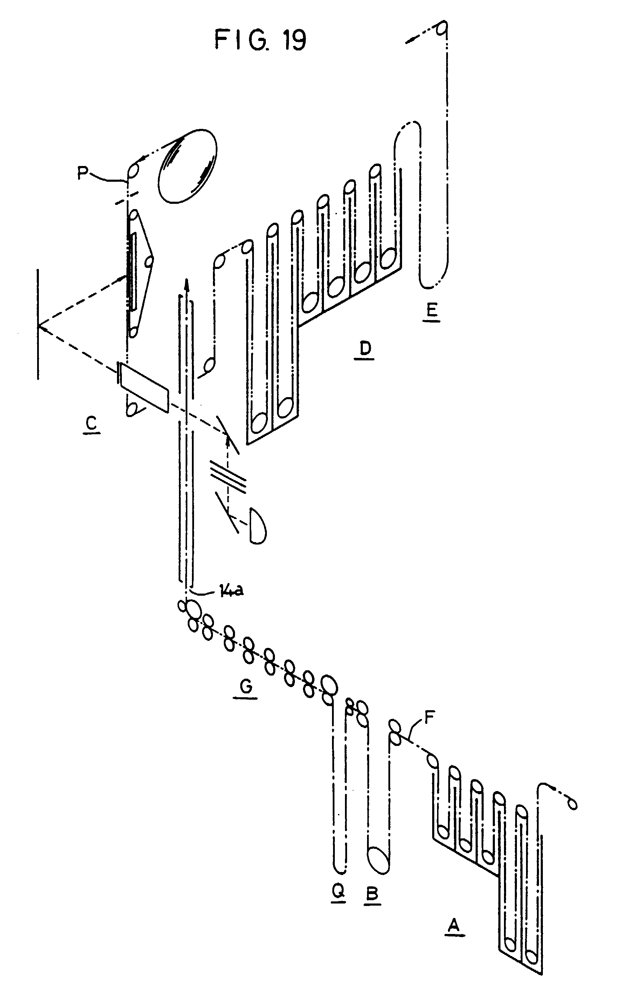

As shown in Figs. 18 and 19, this type of photographic processing machine has a film developing unit A comprising a plurality of treating tanks, a film drying unit B, a printing unit C, a printed paper developing unit D having a plurality of treating tanks, and a printed paper drying unit E. Films F are fed through the units A, B and C. Web of photographic paper P is fed through the units C, D and E. While feeding films and photographic paper, the films are developed and dried and the images thereon are printed onto the photographic paper. The thus printed photographic paper is developed and dried. These steps are all carried out automatically. In the device shown in Fig. 18, the film feed path G extending from the film drying unit B to the printing unit C is located right over the film drying unit B. In the device shown in Fig. 19, the film feed path G extends straight ahead from the unit B.

Films F are fed at different speeds and in different manners in the film developing unit A and the film drying unit B than in the printing unit C. Films are fed continuously fed in the units A and B, while in the unit C, films are intermittently fed frame by frame. Thus, the feed of each film has to be temporarily stopped before feeding it from the unit B to the unit C. For this purpose, a film storing unit Q is provided downstream of the film drying unit B. Each developed and dried film is stored temporarily in the film storing unit Q until the printing of the preceding film F in the unit C is complete.

Since such a film storing unit Q is used merely to stop the feed of film temporarily, it can store only one film. This arrangement poses a problem if it takes a long time for the exposure of the film in the printing unit C. More specifically, the time needed to expose each film in the printing unit C varies according to its shooting conditions. If a film in the printing unit C requires a long exposure time, even though a second film F is being stored in the film stocking unit Q, a third film that follows the second film F may be guided into the unit Q.

Since the developing time is fixed, it is impossible to keep films in the developing/drying unit too long. Thus, the third film has to be fed into the film storing unit Q. Since the unit Q can store only one film, the second film has to be fed to the printing unit C. As a result, the first film in the printing unit C has to be discharged from the printing unit C before printing all the frames.

The film F discharged from the printing unit C before having all its frames printed has to be fed back into the printing unit C for printing and subsequent treatments. This process, called "make-over", has to be carried out interrupting the normal continuous, automatic process. The operating efficiency thus worsens.

Films F that require extra printing or other post-printing treatments have to be fed into the printing unit C through a film inlet 14a.

Since a conventional device can store only one film to feed film intermittently for printing, it was impossible to print another film. Thus, extra printing was possible only while films were not being developed.

A first object of this invention is to provide a photographic processing device which can prevent films F from being discharged from the printing unit C without having all their frames printed.

A second object is to provide a photographic processing device in which extra printing can be carried out while films are being developed and dried.

In order to achieve the first object, according to this invention, there is provided a photographic processing machine comprising the features set out in claim 1.

According to a preferred embodiment, suitable to achieve the second object, the photographic processing machine has a printing unit which has a film inlet for inserting films for extra printing or make-over in addition to the film inlet for ordinary printing.

One of the film storing units stocks a film until the preceding film is printed in the printing unit. In an ordinary photo-processing mode, the other film storing units do not store films but let them pass by. If leaders are attached to films, they are cut apart from the films after they have been developed and dried.

If a film requiring a long time for the exposure of the film is present in the printing unit and the one film storing unit is occupied, the films that have been developed and dried are not fed to the abovementioned one film storing unit but kept in the other film storing units. Thus, there is no need to discharge the film in the printing unit before printing all its frames.

Thereafter, films are printed continuously. If the development of films becomes intermittent, the films stored in the other film storing units are fed one after another into the printing unit, so that printing can be done continuously.

By providing a film inlet for inserting films for extra printing or make-over, it is possible to insert films for extra printing or make-over into the printing unit for printing while interrupting the feed of films from the film storing units to the printing unit. While printing these films, the developed and dried films are stored in the other film storing units. Thus, there is no need to stop the film developing and drying operations. After extra printing or making-over is finished, the films stored in the film storing units are again fed into the printing unit continuously.

According to this invention, since more than one film can be stored at a time, it is possible to minimize the number of films that are discharged from the printing unit before all the frames have been printed, even if a rather long time is taken for exposure. The operating efficiency is thus high.

By providing a film inlet for inserting films for extra printing, it is possible to insert such films, interrupting the ordinary photo-treatment processes. Thus, the operating efficiency improves still further.

In a possible arrangement, two film feed paths are provided parallel to each other and films are fed from one feed path to the other by moving the film storing unit. This makes it possible to reduce the size of the entire device.

A preferred embodiment is defined in claim 2.

Other features and objects of the present invention will become apparent from the following description made with reference to the accompanying drawings, in which:
Fig. 1 is a plan view of one embodiment;
Fig. 2 is a sectional view taken along line I-I of Fig. 1;
Fig. 3 is a sectional view taken along line II-II of Fig. 1;
Fig. 4 is a sectional view taken along line III-III of Fig. 1;
Fig. 5 is a schematic perspective view of the same;
Fig. 6 is a perspective view of a portion of the same;
Figs. 7A and 7B are views that show the operation of the same;
Fig. 8 is a schematic perspective view of a portion of the same;
Fig. 9 is a schematic perspective view of another embodiment;
Fig. 10 is a partial perspective view of the same;
Fig. 11 is a schematic front view of a portion of the same;
Fig. 12 is a schematic front view of a portion of the same;
Figs. 13A and 13B are perspective views of the film guide of the same;
Figs. 14A-14D are views explaining the operation of the same;
Fig. 15 is a partial perspective view of a film having a leader attached thereto;
Fig. 16 is a schematic perspective view of another embodiment;
Fig. 17 is a schematic perspective view of another embodiment;
Fig. 18 is a schematic perspective view of the prior art; and
Fig. 19 is a schematic perspective view of the prior art.

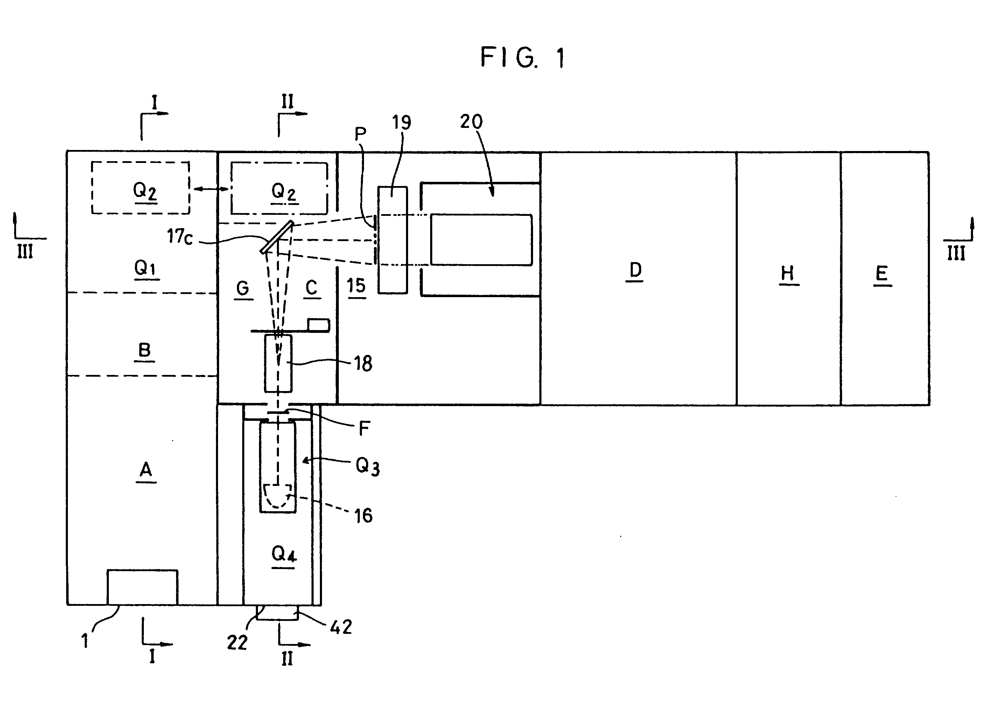

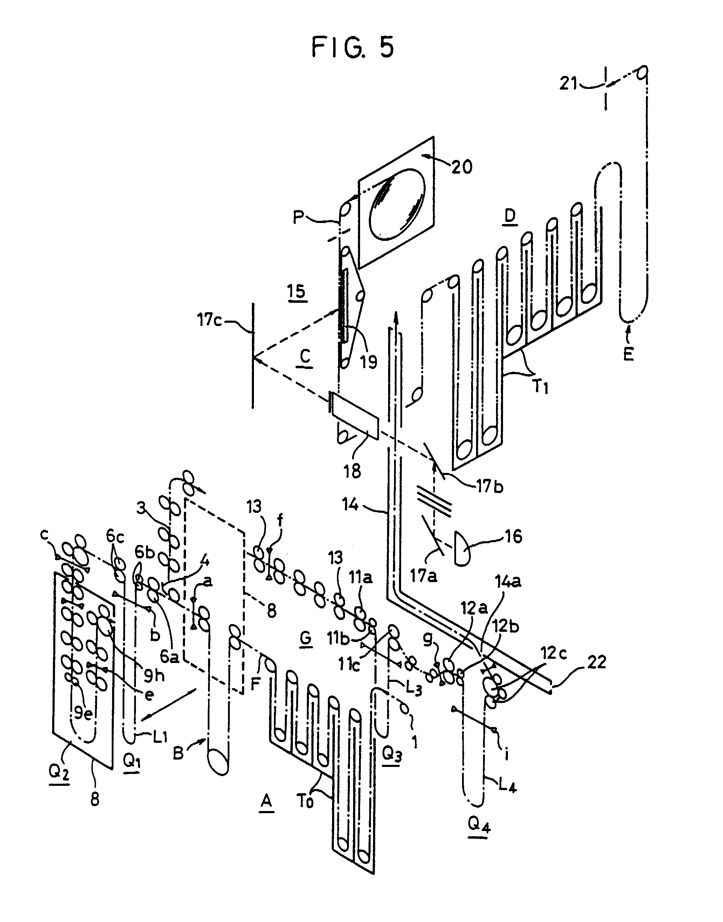

Figs. 1-8 show one embodiment of this invention. Fig. 5 schematically shows this embodiment. A film F is fed manually into the film developing unit A through its film inlet 1. It is then automatically developed by being fed through treating solutions in a plurality of treating tanks T₀. The film F thus developed is fed into the film drying unit B and dried. After drying, it is fed toward a first film storing unit Q1.

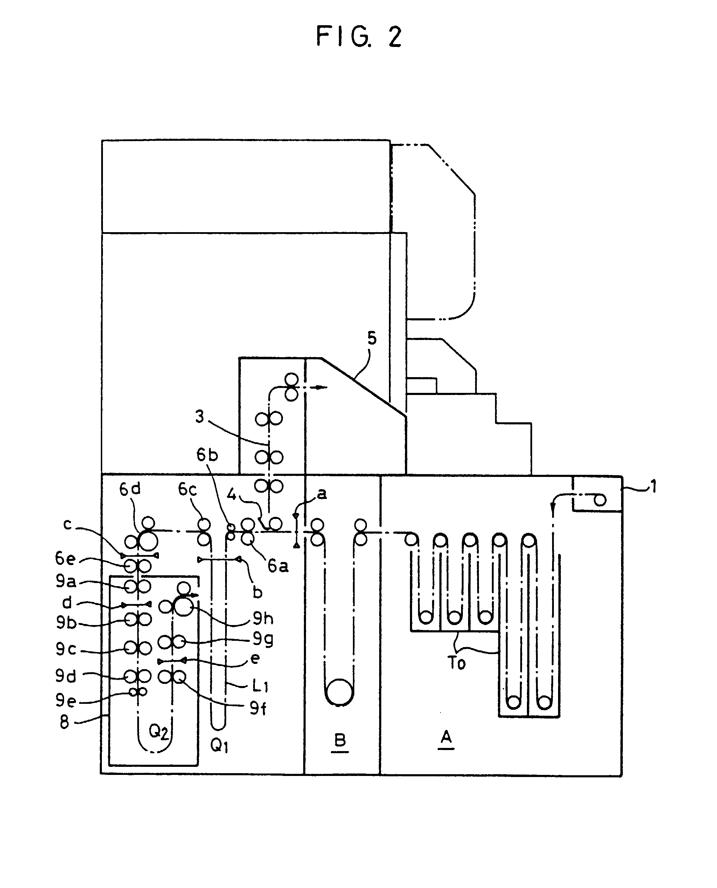

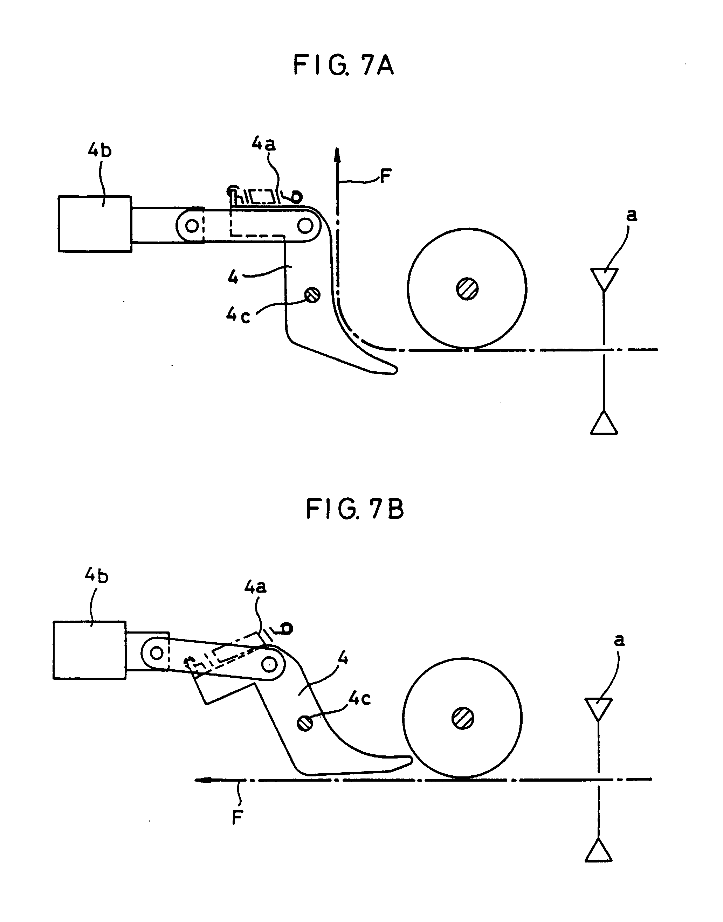

Upstream of the film storing unit Q1 is a changeover guide 4 for changing over the feed direction toward a film discharge route 3 (see Figs. 5-7). The changeover guide 4 is normally urged downward about a pivot center 4c by a spring 4a as shown in Fig. 7A so that its free end is located along the feed path of the film F. The film F is thus fed into the film discharge route 3 and then into a film store 5 (Fig. 2). Films are fed in this direction when films are only to be developed or if any unit in the later stage such as the first film storing unit Q1 should fail. Films can be discharged manually from the film developing unit A through the changeover guide 4 into the film store 5 in case of e.g. power failure.

On the other hand, when developing and then printing films, the changeover guide 4 is turned by a solenoid 4b as shown in Fig. 7B as soon as the leading end of film F is detected by a sensor a located immediately before the guide 4 so that its free end gets out of the film feed path. The film F is thus fed straight ahead to the first film storing unit Q1.

The first film storing unit Q1 has a plurality of pairs of feed rollers 6 that are arranged in one direction. The film F is fed in one direction or forms a loop L1 by turning or stopping the feed rollers 6a, 6c.

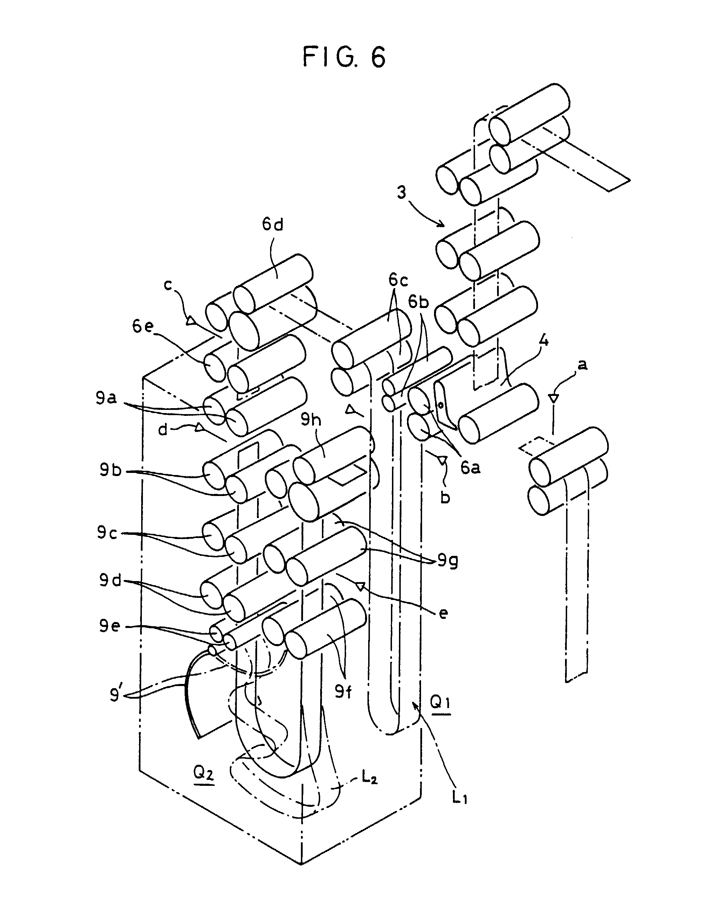

Namely, as shown in Figs. 5 and 6, after passing through the changeover guide 4, the film F is fed straight ahead by the feed rollers 6a and 6c and then turned downwards by a feed roller 6d. After its leading end has been detected by a sensor c, the film is further fed a predetermined distance. When the film leading end is caught between the feed rollers 6e, the feed rollers 6c and 6d are stopped. On the other hand, the feed rollers 6a keep rotating, feeding the film F ahead. Thus, the loop L1 is formed. Even after the rear end of the film F has passed by the feed rollers 6a, the film is still held between the free press rollers 6b. The loop L1 is thus maintained. The rollers are driven by a pulse motor.

When the second film storing unit Q2 is in a predetermined position (shown by solid line in Fig. 5), the feed rollers 6c, 6d and 6e begin turning when the sensor a detects the rear end of the film F or when the sensor b confirms the loop L1. The film F is thus fed into the second film stocking unit Q2. On the other hand, if the unit Q2 is not in the predetermined position, the loop L1 is formed and maintained. In this state, when the second film storing unit Q2 moves to the predetermined position, the film F is fed into the unit Q2.

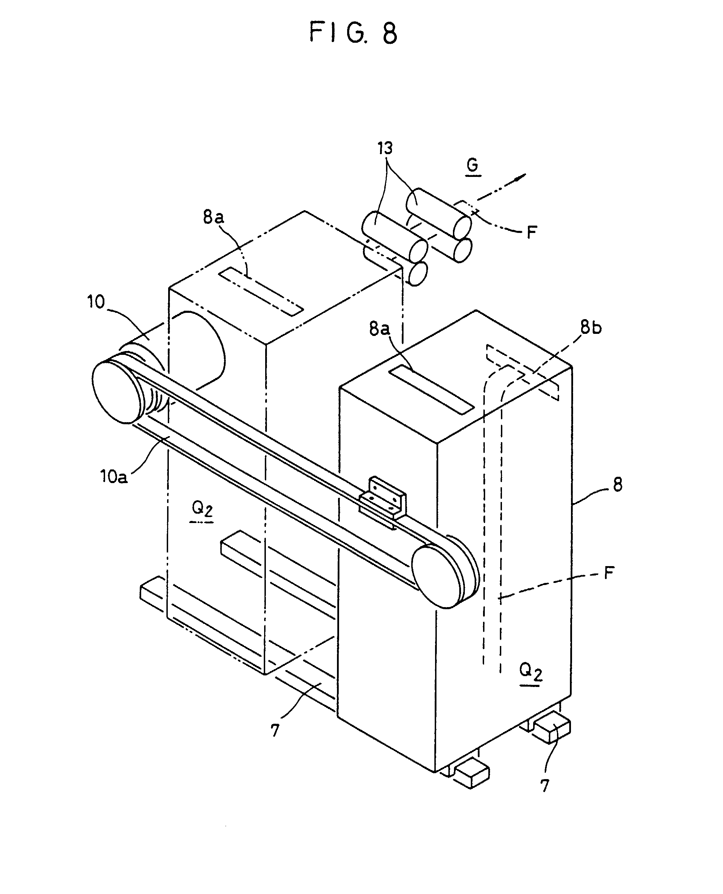

As shown in Figs. 6 and 8, the second film storing unit Q2 is mounted in a casing 8 movable along lateral rails 7. The film F which has been sent from the first film storing unit Q1 is fed into the second film storing unit Q2 through an inlet 8a formed in the top surface thereof. A loop L2 is formed by controlling feed rollers 9a, 9b....

Namely, feed rollers 9a, 9b, 9c and 9d are driven by a single common pulse motor, while feed rollers 9f, 9g and 9h are driven by another pulse motor. When a guide plate 9' is in the position shown by chain line, the film F fed through the inlet 8a is run along a U-shaped path by synchronously driving the feed rollers 9a... 9h. When a sensor e detects the leading end of the film, the rollers 9f-9h are stopped for a predetermined time period, while the guide plate 9' moves back to the position shown by solid line. The film F is looped at L2 in the casing 8 with its leading end turned forwardly by the feed roller 9h. The formation of the loop L2 is completed when the rear end of the film F is caught between the idling press rollers 9e. On the other hand, the sensor d checks whether the film F has been completely pulled into the casing 8. The feed rollers 9a-9d are then stopped.

When one film F has been fed into the second film stocking unit Q2, the casing 8 is moved laterally by a pulse motor 10 through a belt 10a to the position shown by chain line of Fig. 8 and stopped. The casing 8 is moved and stopped by controlling the number of pulses supplied to the motor 10.

In the position shown by chain line of Fig. 5, the casing 8 is aligned with a straight feed path G that runs parallel to the film F feed path in the film developing unit A. Thus, the film stored in the second film stocking unit Q2 is fed out through its outlet 8b formed in the front side thereof toward the straight feed unit G. From the unit G, the film F is fed to third and then fourth film storing units Q3 and Q4.

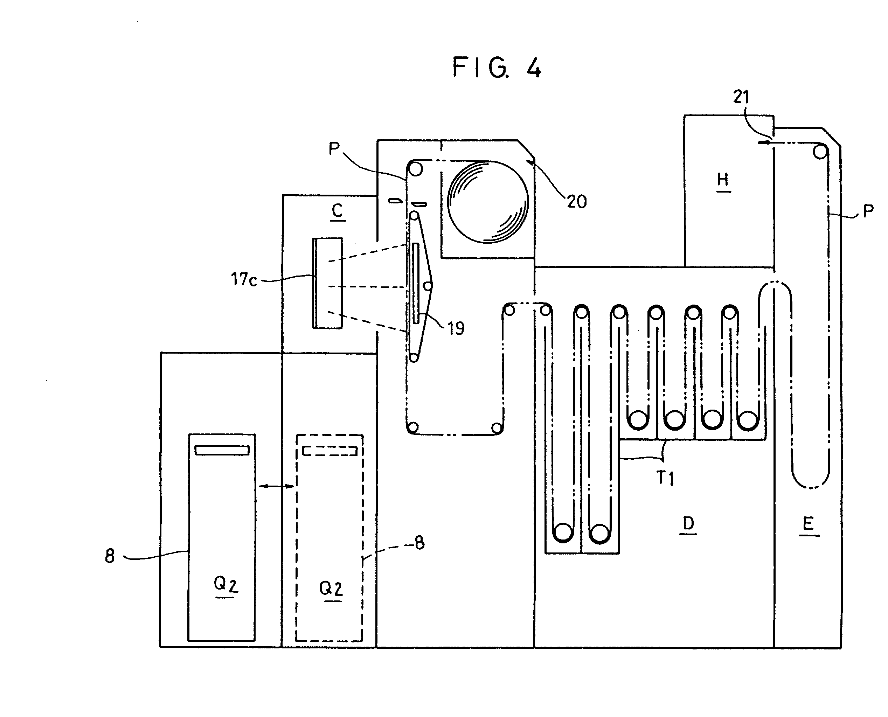

The film F in the second film storing unit Q2 is fed out by means of feed rollers 9f-9h. When a sensor f detects the rear end of the film F, the casing 8 is moved back to the position behind the first film storing unit Q1 (the position shown by solid line of Fig. 5). The straight feed unit G has a plurality of feed rollers 13 and a belt 13a wound therearound. The film F is fed by rotating the feed rollers 13 by a pulse motor 13c through the belt 13a (Fig. 3).

The third and fourth film storing units Q3, Q4 have rollers 11a-11c and 12a-12c and sensors g, h and i which are similar to those of the first film storing unit Q1 to stock films F therein. If no film F is stored in the fourth film storing unit Q4, a film being fed into the third film storing unit Q3 is not stored in the unit Q3 but fed toward the fourth film storing unit Q4.

Namely, the sensor i, which is similar to the sensor b, detects whether or not there is a loop L4 in the fourth film storing unit Q4. If not, the feed rollers 11c keep rotating, so that the film F is fed into the fourth film storing unit Q4 without forming a loop L3 in the unit Q3. On the other hand, if the loop L4 is detected, after the leading end of the film F is detected by the sensor g, the feed rollers 11c are stopped and caught between the feed rollers 12a. A loop L3 is thus formed in the unit Q3 because the feed rollers 11a keep rotating.

When all the frames of the film F in the printing unit C are printed, this film F is discharged. Then, the film F stored in the film storing unit Q4 is fed toward the exposure unit 15 through the negative mask 14 by the feed roller 12c, which is located behind the unit Q4.

In the exposure unit 15, the light from a light source 16 is emitted through two mirrors 17a, 17b against he film F fed into the exposure unit 15. The images on the film F are enlarged by a printing lens 18 and printed through a mirror 17c on photographic paper P pulled out onto an exposure table 19.

The photographic paper P is stored in a magazine 20 in the form of a roll and pulled out onto the exposure table 19. After printing, the paper P is developed by being fed through various treating solutions in a plurality of treating tanks T1 in the developing unit D. The paper thus developed is then fed through the drying unit E and sent out through a discharge port 21 into a sorter H.

Besides the film inlet 14a, the negative mask 14 has another film inlet 22 for inserting films for extra printing or make-over. Film F fed through the inlet 22 is processed in the printing unit C in exactly the same way as the films fed through the inlet 14a. Namely, their images are printed onto photographic paper P, which is subsequently developed and dried.

When a film F is fed into the negative mask through its inlet 22 while processing films fed through the inlet 14a, after discharging the film F in the printing unit C, the film in the fourth film storing unit Q4 is not fed toward the printing unit C but stored in the unit Q4 in the form of a loop L4. In this state, the developed film F fed into the third film storing unit Q3 will not be sent to the unit Q4 but be kept in the unit Q3 in the form of a loop L3. If the loop L3 is already formed in the unit Q2, the film F is stored in the unit Q2 in the form of a loop L2. If the loop L2 is already formed in the unit Q2, the film F is stored in the unit Q1 in the form of a loop L1. Thus, extra printing and make-over steps can be carried out without affecting the ordinary steps for developing and drying films.

Printing processes are carried out continuously thereafter. If the developing becomes not continuously but intermittent, irrespective of the length of interval, the portions of the film F in the film storing units Q1-Q4 are fed one after another to the printing unit for printing.

If the film F requiring a rather long time for exposure is in the printing unit C, the following film is stored in the fourth film storing unit Q4. If a loop is already formed in the unit Q4, films are stored in the form of loops in the film storing units Q3, Q2 and then Q1 in the manner as described above.

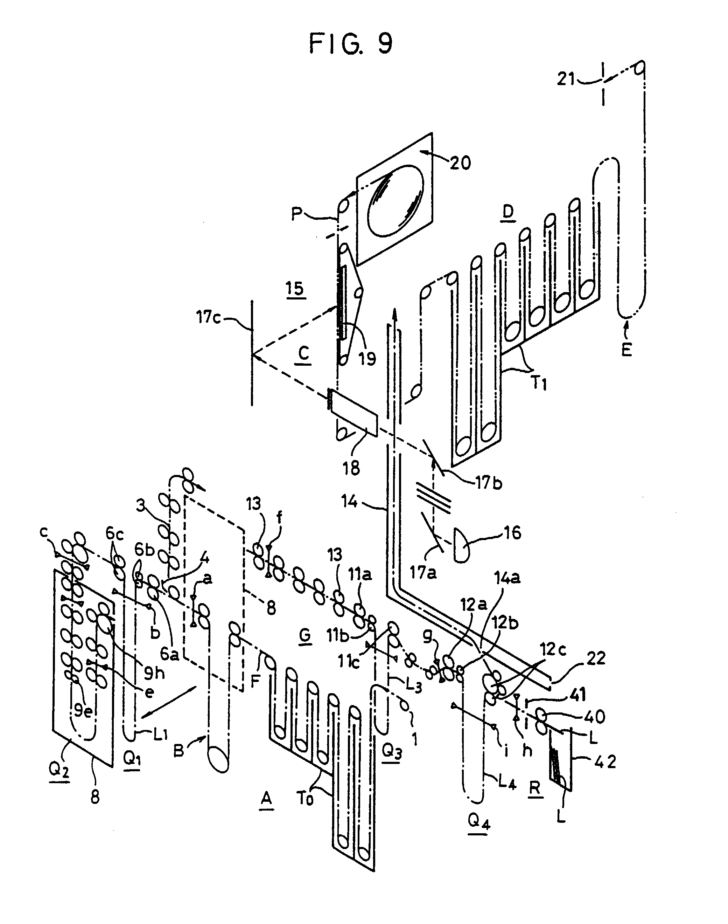

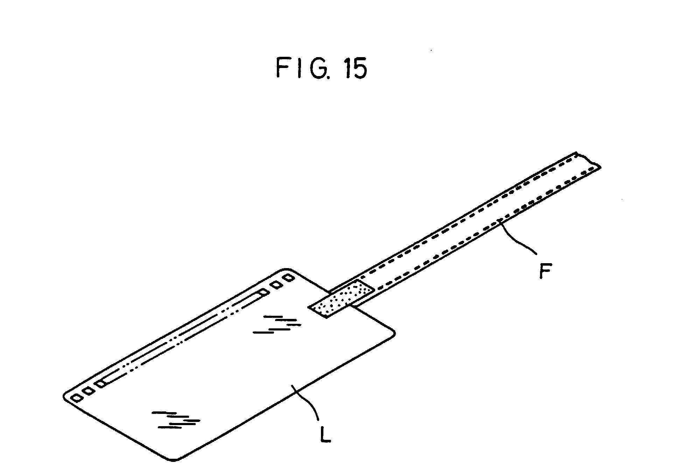

Figs. 9-14 show another embodiment. In this embodiment, a leader L is attached to each film F as shown in Fig. 15. This embodiment differs from the previous embodiment in the structure of the movable film storing unit Q2 and in that a leader separating means R is provided (see chain lines in Figs. 1 and 3).

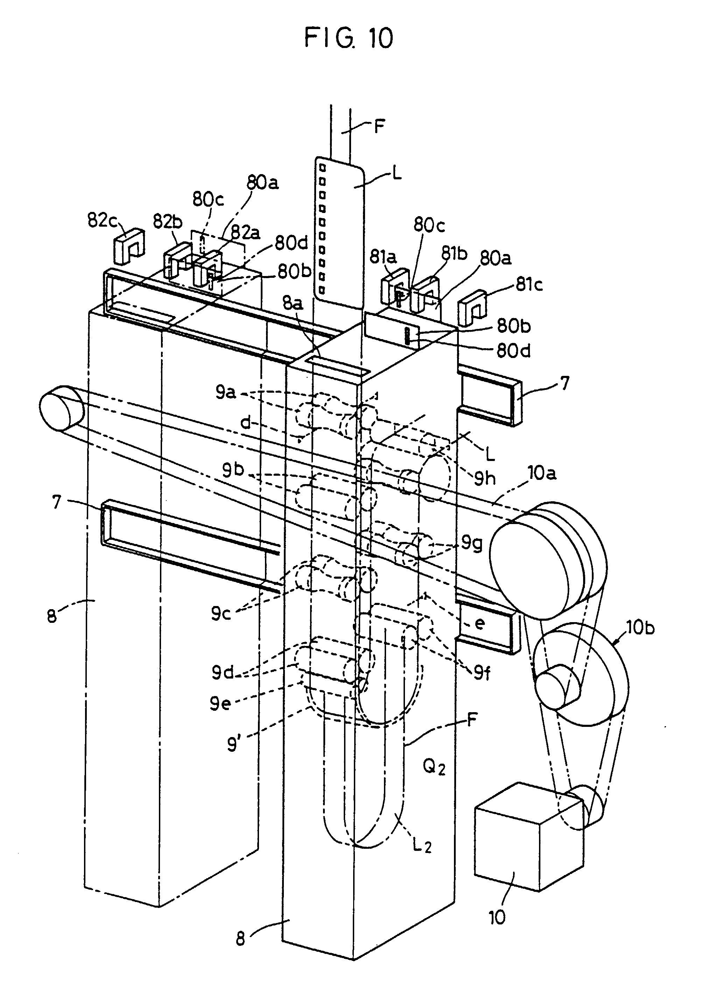

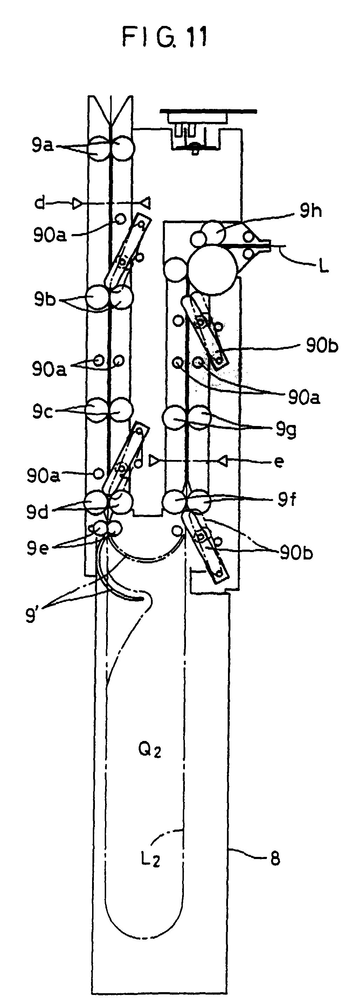

Similar to the first embodiment, the film storing unit Q2 has a plurality of feed rollers 9a ... 9h in the casing 8 as shown in Figs. 10 and 11. Some of these rollers 9a .... are hourglass-shaped with the central portions cut away as shown in the figures. Since films F are fed through such central cut-away portions, they hardly touch these hourglass-shaped rollers. Since the leader L is wider than the cut-away portions, it is fed sandwiched between the feed rollers 9a.... Predetermined ones of the other feed rollers 13, 12a, 11a, ..... in this embodiment are also hourglass-shaped with their central portions cut away.

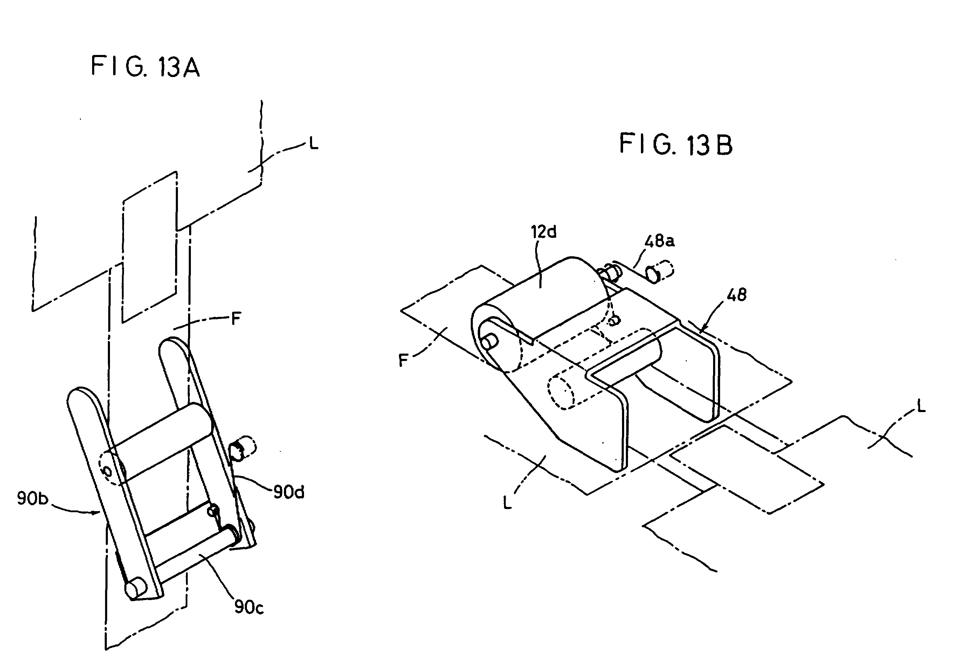

Though not shown in Fig. 10, cylindrical auxiliary rollers 90a and film guides 90b are provided in the casing 8 as shown in Fig. 11. As shown in Fig. 13A, each film guide 90b is pivotally mounted on a support shaft 90c secured to a base e.g. the casing 8. Normally, the guides 90b are urged to the position shown by solid lines in Fig. 11 by springs 90d to guide the film F as shown in Fig. 13A. Upon contact with the leader L, they are swung back as shown by chain lines in Fig. 11, allowing the passage of the leader to pass.

The casing 8 is moved by a pulse motor 10 through a speed reducer 10b and a belt 10a. The casing 8 carries on its top two parallel detection plates 80a and 80b. Three sensors each 81a, 81b and 81c and 82a, 82b and 82c are provided along the respective travel paths of the detection plates 80a and 80b. While the detection plates 80a, 80b are passing through between the respective sensors 81a..., 82a..., they are turned off because the lights transmitted across the respective sensors are blocked by the detection plates 80a, 80b.

When the detection plates 80a, 80b move into between the first sensors 81a, 82a, blocking the lights transmitted thereacross, they are turned off. When the detection plates move further ahead and get into between the second sensors 81b, 82b, they are turned off. When slits 80c, 80d formed in the respective detection plates 80a, 80b are located between the first sensors 81a, 82a, the first sensors are turned on. In this position, i.e. the position in which the first sensors 81a, 82a are on and the second sensors 81b, 82b are off, the pulse motor 10 is stopped. The casing 8 is thus maintained in this position. If the casing 8 should overrun, thus turning the third sensors 81c, 82c off, the pulse motor 10 will be turned in reverse direction to move the casing 8 back until the first sensors 81a, 82a, which has been turned on and then off, is turned back on again (until the slits 80c, 80d move into between the first sensor again). Thus, the third sensors 81c, 82c detect the respective ends of the casing 8.

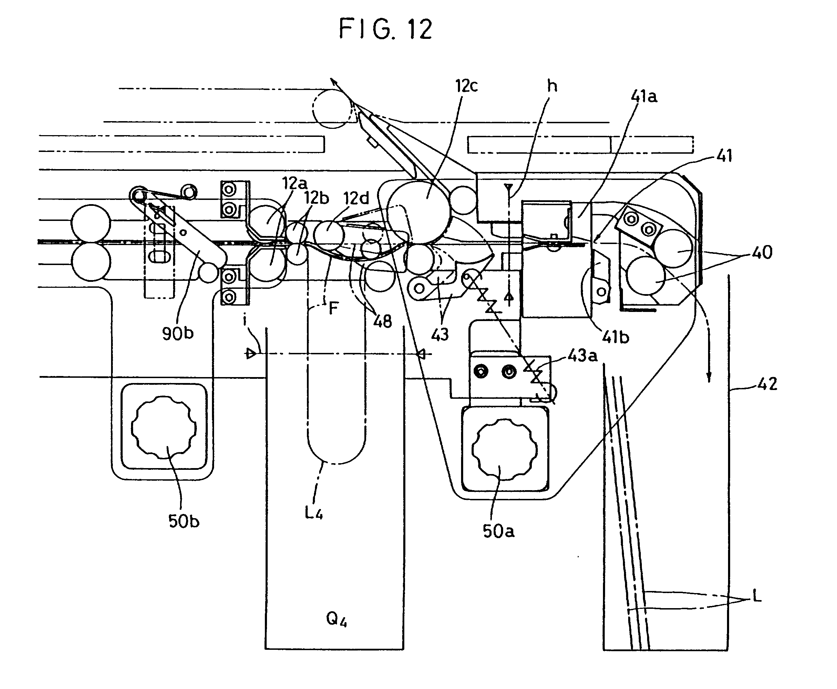

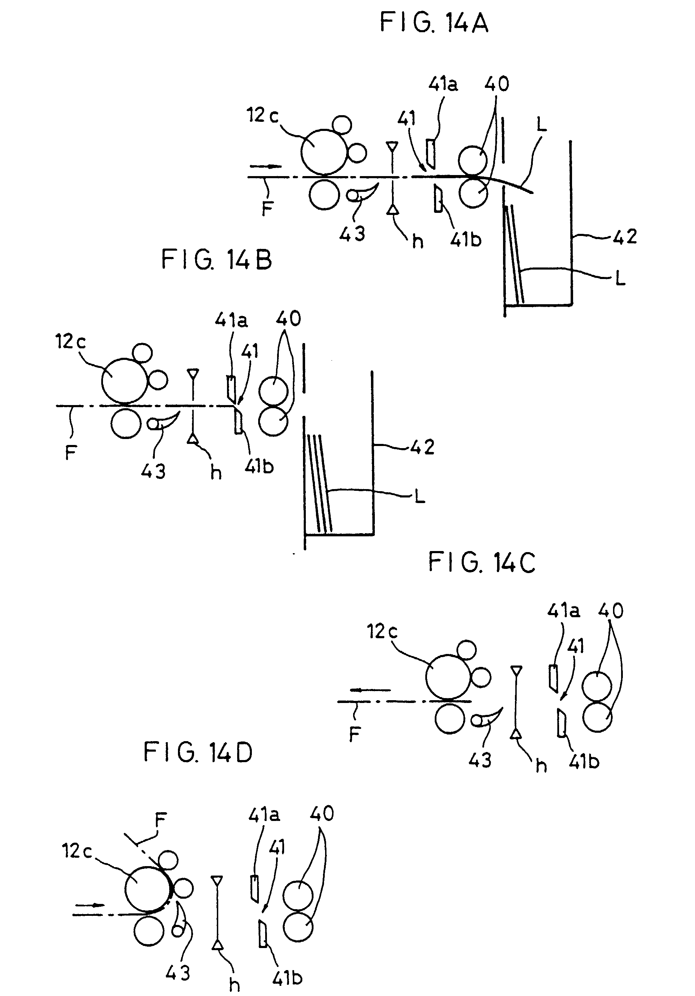

As shown in Figs. 12-14, the leader separating means R comprises a cutter 41 made up of upper and lower blades 41a, 41b, a leader store 42 and a guide 43. A film F having a leader L which has been attached thereto is fed until its end protrudes from delivery rollers 40 as shown in Figs. 12 and 14A and then cut by the cutter 41 as shown in Fig. 14B to separate the leader L from the film. The cutter 41 is activated when the feed rollers 12c have turned a predetermined time period after detecting the leader L by the sensor h. The leader L thus cut apart is fed by the delivery rollers 40 and dropped into the leader storer 42.

The guide 43, provided near the feed rollers 12c, is kept out of the film feed path, allowing smooth feed of the leader L (film F). When the leader L is cut apart and dropped into the leader storer 42, the feed rollers 12c turn in reverse, rewinding the film F to the position shown in Fig. 14C. The guide 43 is erected in this state as shown in Fig. 14D. Then, the film F is fed forward again and turned upwards by the guide 43. The guide 43 is moved out of the film feed path by a rotary solenoid provided coaxially with the shaft of the guide 43 and returned to the erect position by a spring 43a. The delivery rollers 40 and feed rollers 12c are driven by a pulse motor 50a, while the feed rollers 12a are driven by a pulse motor 50b.

In Fig. 12, numeral 48 indicates a film guide for bending the film F downwards. As shown in Fig. 13B, it is pivotally mounted on a guide roller 12d. Normally, it is kept in the position shown by solid line in Fig. 12 by a spring 48a. When the leader L is inserted under the film guide 48 as shown by two-dot chain line in Fig. 13B, the film guide 48 is raised to the position shown by chain line in Fig. 12. When the film F is subsequently inserted under the film guide 48 as shown by chain line in Fig. 13B, the film guide 48 will return to the position shown by solid line in Fig. 12 because the film is narrower than the leader L. The film F is thus bent downwards. Thus, by feeding the film by the feed rollers 12a, the loop L4 as shown by chain line in Fig. 12 can be formed smoothly. Similar film guides 48 should be provided in the other film storing units Q1 .....

Similar to the first embodiment, when all the frames on the film F in the film printing unit C have been printed, the film will be discharged and the feed roller 12c, which is located behind the fourth film storing unit Q4, feeds the film F kept in the unit Q4 (with its leading end turned upwards as shown in Fig. 14D) to the exposure unit 15 through the negative mask 14. The images on the film F are then printed onto photographic paper.

In the above embodiments, the film feed path are divided into two parts that extend parallel to each other in a single plane by providing the movable second film stocking unit Q2. Thus, in spite of the fact that there are provided a plurality of film storing units Q1-Q4, the entire device is not very large because the film feed path is not a straight path.

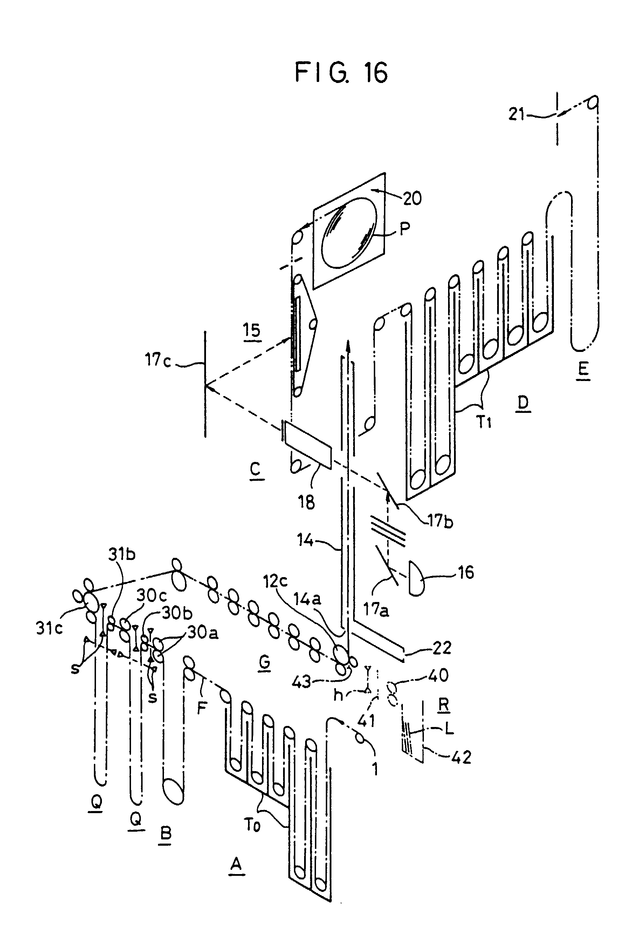

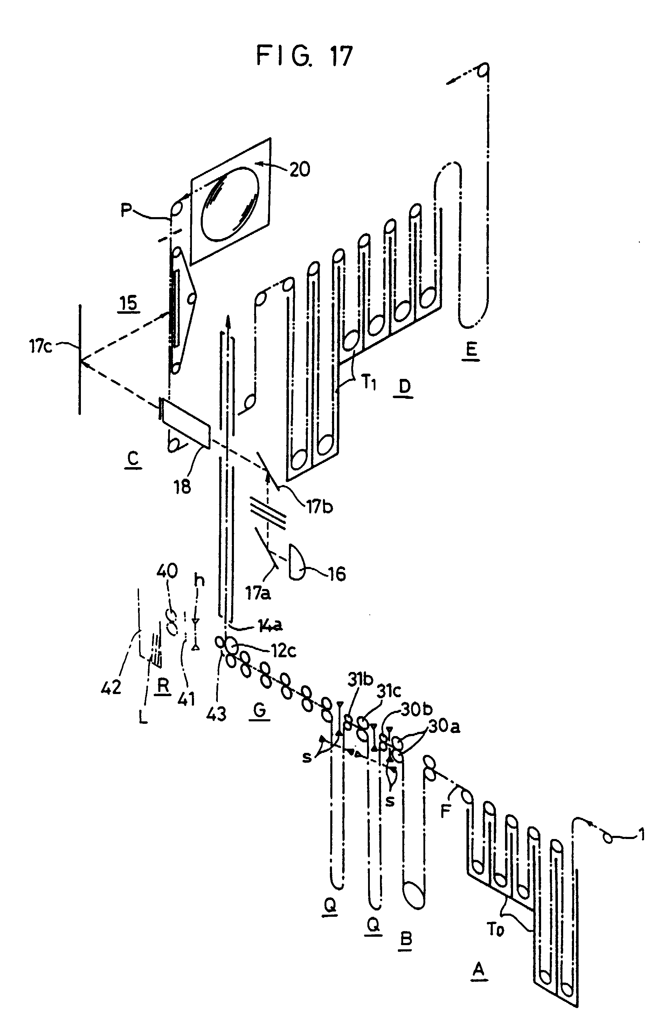

Also, as shown in Figs. 16 and 17 (chain lines indicate the leader separating means R), the abovementioned advantages are achievable when additional film storing units Q are provided behind the film storing units Q in the device shown in Figs. 18 and 19. Instead of providing two each feed rollers 11a, 11c and 12a, 12c between the third and fourth film storing units Q3 and Q4, one pair of rollers 11c and 12a may be commonly used for both units Q3 and Q4. Namely, each of the units Q3 and Q4 may comprise two feed rollers 30a and 30c. In the figures, numerals 30b and 31b indicate free press rollers and s indicates a sensor. In the embodiments shown in these figures, the straight feed path G is in a vertical plane that contains the film developing unit A and the film drying unit B.

In the above embodiments, the straight feed path G is used simply to feed films. But this portion may be also used as an extra film storing unit by providing a sensor similar to those provided in the other film storing unit and replacing the feed rollers 13 with ones which can be selectively turned on and off. With this arrangement, it is possible to store a film in the feed unit G by temporarily stopping the feed of the film and also stopping the feed of the film in the second film storing unit Q2.

In any of the embodiments, the number of film storing units and their positions are not limited. For example, an extra film storing unit may be provided in the straight film feed path G.

## Claims

1. A photographic processing machine comprising a film developing unit (A), a film drying unit (B), a printing unit (C), a photographic paper developing unit (D) and a photographic paper drying unit (E), wherein a film (F) is fed through the film developing unit and the film drying unit to develop and dry the film, and wherein photographic paper (P) is fed through the printing unit (C), photographic paper developing unit (D) and photographic paper drying unit (E) to print images on the film onto the photographic paper and to develop and dry the photographic paper,
wherein a film inlet formed in said film developing unit (A), the film developing unit (A) and the film drying unit (B) are arranged along a straight line,
wherein a plurality of film storing units (Q₁ to Q₄) are provided in a film feed path from said film drying unit (B) to said printing unit (C), each of said film storing units being capable of selectively storing a film or feeding a film ahead without storing, **characterized in that** a film feed path unit (G) is provided, the axis of which extends parallel to the straight line that extends through the film developing unit (A) and film drying unit (B), to a film inlet (14a) formed in said printing unit (C), some film storing units (Q₃, Q₄) being provided in said film feed path, unit,
and in that one (Q₂) of said film storing units (Q₁ to Q₄), provided downstream of said film drying unit and upstream of said film feed path unit, is movable perpendicular to said straight line between a first position aligning with said straight line and a second position aligning with said axis of said film feed path, unit.

2. A photographic processing machine according to claim 1 further comprising a means (R) for separating the leader (L) from the film (F), said means (R) being provided upstream of said printing unit.

3. A photographic processing machine as claimed in claims 1 or 2 wherein said printing unit (C) has a film inlet (22) for inserting films (F) for extra printing or make-over in addition to the film inlet.

## Patentansprüche

1. Photographische Verarbeitungsmaschine, die eine Film-Entwicklungs-Einheit (A), eine Film-Trocken-Einheit (B), eine Kopier-Einheit (C), eine Photopapier-Entwicklungs-Einheit (D) und eine Photopapier-Trocken-Einheit (E) umfaßt, wobei ein Film (F) durch die Film-Entwicklungs-Einheit und die Film-Trocken-Einheit transportiert wird, um den Film zu entwickeln und zu trocknen, und wobei Photopapier (P) durch die Kopier-Einheit (C), die Photopapier-Entwicklungs-Einheit(D) und die Photopapier-Trocken-Einheit (E) transportiert wird, um Bilder auf dem Film auf das Photopapier zu kopieren und das Photopapier zu entwickeln und zu trocknen, wobei ein Filmeinlaß, der in der Film-Entwicklungs-Einheit (A) ausgebildet ist, die Film-Entwicklungs-Einheit (A) und die Film-Trocken-Einheit (B) auf einer geraden Linie angeordnet sind, wobei eine Vielzahl von Film-Aufbewahrungs-Einheiten (Q₁ bis Q₄) auf einem Filmtransportweg von der Film-Trocken-Einheit (B) zu der Kopier-Einheit (C) vorhanden sind und jede der Film-Aufbewahrungs-Einheiten wahlweise einen Film aufbewahren oder einen Film ohne Aufbewahrung weitertransportieren kann, **dadurch gekennzeichnet,** daß:
eine Filmtransportweg-Einheit (G) vorhanden ist, deren Achse parallel zu der geraden Linie verläuft, die durch die Film-Entwicklungs-Einheit (A) und die Film-Trocken-Einheit (B) zu einem Filmeinlaß (14a) verläuft, der in der Kopier-Einheit (C) ausgebildet ist, wobei einige Film-Aufbewahrungs-Einheiten (Q3, Q4) in der Filmtransportweg-Einheit vorhanden sind,
und dadurch, daß eine (Q2) der Film-Aufbewahrungs-Einheiten (Q1 bis Q4), die stromab von der Film-Trocken-Einheit und stromauf von der Filmtransportweg-Einheit vorhanden ist, senkrecht zu der geraden Linie zwischen einer ersten Position, in der sie auf die gerade Linie ausgerichtet ist, und einer zweiten Position, in der sie auf die Achse der Filmtransportweg-Einheit ausgerichtet ist, bewegt werden kann.

2. Photographische Bearbeitungsmaschine nach Anspruch 1, die des weiteren eine Einrichtung (R) umfaßt, die das Filmvorlaufende (L) von dem Film (F) trennt, wobei die Einrichtung (R) stromauf von der Kopier-Einheit angeordnet ist.

3. Photographische Bearbeitungsmaschine nach Anspruch 1 oder 2, wobei die Kopier-Einheit (C) einen Filmeinlaß (22) zum Einführen von Filmen (F) zum zusätzlichen Kopieren oder Überarbeiten zusätzlich zu dem Filmeinlaß aufweist.

## Revendications

1. Une machine de traitement photographique comprenant une unité de développement de film (A), une unité de séchage de film (B), une unité d'impression (C), une unité de développement de papier photographique (D) et une unité de séchage de papier photographique (E), dans laquelle un film (F) est passé dans l'unité de développement de film et l'unité de séchage de film, afin de développer et de sécher le film, et dans laquelle du papier photographique (P) est passé par l'unité d'impression (C), l'unité de développement de papier photographique (D) et l'unité de séchage de papier photographique (E), afin d'imprimer des images sur le film, sur le papier photographique et de développer et sécher le papier photographique,
dans laquelle une entrée de film, formée dans ladite unité de développement de film (A), l'unité de développement de film (A) et l'unité de séchage de film (B), sont agencées suivant une ligne droite,
dans laquelle une pluralité d'unités de stockage (Q₁ à Q₄) sont prévues dans un chemin d'alimentation en film allant de ladite unité de séchage de film (B) à ladite unité d'impression de film (C), chacune desdites unités de stockage de film étant en mesure de stocker sélectivement un film ou de fournir un film sans procéder à un stockage,
caractérisée en ce qu'est prévue une unité d'acheminement d'alimentation de film (G), dont l'axe s'étend parallèlement à la ligne droite passant par l'unité de développement de film (A) et l'unité de séchage de film (B), allant à une entrée de film (14a) formée dans ladite unité d'impression de film (C), certaines des unités de stockage de film (Q₃,Q₄) étant prévues dans ladite unité d'acheminement d'alimentation en film et en ce que
l'une (Q₂) desdites unités de stockage de film (Q₁ à Q₄), installées en aval de ladite unité de séchage de film et en amont de ladite unité d'acheminement d'alimentation en film, est déplacable perpendiculairement à ladite ligne droite, entre une première position, en alignement avec ladite ligne droite, et une deuxième position, en alignement avec ladite unité d'acheminement d'alimentation en film.

2. Une machine de traitement photographique selon la revendication 1, comprenant en outre des moyens (R) pour séparer l'amorce (L) du film (F), lesdits moyens (R) étant prévus en amont de ladite unité d'impression.

3. Une machine de traitement photographique selon la revendication 1 ou 2, dans laquelle ladite unité d'impression (C) a une entrée de film (22) destinée à insérer des films (F) pour effectuer un tirage spécial, ou un transfert ou une reprise, en plus de l'entrée de film.
